# EUROPEAN PATENT APPLICATION

(11) **EP 4 497 523 A1**
(43) Date of publication of application: **29.01.2025**
(21) Application number: 23774500.5
(22) Date of filing: 07.03.2023
(51) Int. Cl.: B23B 27/16, B23B 27/04, B23B 27/14

(54) **CUTTING INSERT AND TURNING TOOL**

(30) Priority: 23.03.2022 JP 2022047256
(71) Applicant: Tungaloy Corporation, Iwaki-shi Fukushima 970-1144 (JP)
(72) Inventor: MIYAZAWA, Shunsuke, Iwaki-shi, Fukushima 970-1144 (JP)
(74) Representative: Vossius & Partner Patentanwälte Rechtsanwälte mbB
(86) International application number: PCT/JP2023/008468
(87) International publication number: WO 2023/181901

(57) **Abstract**

Provided is a cutting insert or the like that is capable of copy machining in a narrow space and is also highly economical. A cutting insert (3) has a first end portion (4) and a second end portion (5) formed in substantially the same shape. A cutting edge (10) of the first end portion (4) includes a curved corner cutting edge (13) and a pair of lateral cutting edges (11 and 12) disposed such that both ends (13L and 13R) of the corner cutting edge (13) are sandwiched therebetween. The pair of lateral cutting edges (11 and 12) are formed linearly and form an acute angle (γ). A side surface (9) has a corner flank (94) continuous with the corner cutting edge (13) and a flat surface (95) disposed further toward a bottom surface (8) than the corner flank (94) at a portion (93) abutting on the corner cutting edge (13).

## Description

### Technical Field

The present invention relates to a two-corner type cutting insert and a turning tool provided with the cutting insert.

### Background Art

There is a two-corner type cutting insert called a dog-bone type cutting insert, which has substantially a rod shape and has at both end portions thereof cutting edges (see, for example, Patent Documents 1 to 4). Since a cutting insert having such a shape can perform grooving and cutting off as well as lateral feed machining, the cutting insert can be used for finishing and copy machining of a product.

A blisk, in which blades and a rotor disk are integrated in order to reduce weight and improve performance, is used in a turbine for a turbo pump mounted in an engine system for an aircraft, a space rocket, or the like. A labyrinth seal is often used as a seal to suppress fluid from leaking from a gap between the blisk that rotates due to fluid pressure and a stator which is stationary. Fin-like protrusions that constitute the labyrinth seal are machined on the surface of the blisk.

A gap between adjacent protrusions on the surface of the blisk is designed to be narrow such that the protrusions machined on the blisk and the protrusions machined on the stator are intricately intertwined to provide sealing performance. The cutting inserts described in Patent Documents 1 to 3 have at both end portions thereof circular or trapezoidal cutting edges. When an unmachined portion is machined with a cutting edge having such a shape, the cutting edge interferes with an adjacent machined portion, and thus it is not possible to machine a structure that includes a narrow gap. In machining the blisk, a form tool or insert that has a shape that replicates the gap between the protrusions of the labyrinth seal is used.

### Citation List

### Patent Document

Patent Document 1: Japanese Translation of PCT Application No. 2002-524272
Patent Document 2: Patent Publication JP-A-H8-229709
Patent Document 3: Patent Publication JP-A-2020-104243
Patent Document 4: Patent Publication JP-A-2006-198704

### Summary

### Technical Problem

However, the blisk, which is used in harsh environments where the blisk is constantly exposed to high temperatures, is made of a difficult-to-cut material such as a nickel-based alloy or titanium alloy. Since a cutting resistance is higher in form tool machining than in copy machining or the like, when the difficult-to-cut material is machined, machining defects (chattering) may occur due to vibration, or the protrusions may bend during machining to escape from the cutting edge, resulting in reduced machining accuracy. Since the sealing performance of the labyrinth seal affects the efficiency of the turbo pump, particularly strict machining precision is required for the machining of the protrusions inside the seal.

Therefore, instead of the form tool (whole form bite) or the like, it is conceivable to use a cutting insert having a sharply pointed end portion that is less likely to interfere even when being inserted into a narrow space. If the gap between the protrusions is copy-machined using lateral feed machining, a cutting resistance is lower than in a case in which the form tool machining is performed, and the machining accuracy of the labyrinth seal is improved. Furthermore, since gaps having various shapes can be machined using cutting inserts having the same shape, there is no need to prepare form tools or the like for each shape of the protrusion. On the other hand, if both end portions of the cutting insert are sharply pointed, a contact area between a tool body and the cutting insert is small, and thus the cutting insert may not be stably restrained by the tool body. If a one-corner type cutting insert, in which a cutting edge is formed on only one end portion, is used, the other end, on which no cutting edge is formed, can be shaped specifically for restraint with the tool body to stabilize a restraint force, but running cost will increase compared to a two-corner type cutting insert.

The present invention has been made in consideration of the above circumstances, and an object of the present invention is to provide a cutting insert or the like that is capable of copy machining in a narrow space and is also highly economical.

### Solution to Problem

A cutting insert according to one aspect of the present invention extends in a longitudinal direction from a first end to a second end on an opposite side to the first end. A first end portion that includes the first end and a portion in the vicinity thereof and a second end portion that includes the second end and a portion in the vicinity thereof are formed in substantially a same shape. The first end portion has a rake surface and a bottom surface disposed on opposite sides to each other in a height direction orthogonal to the longitudinal direction, a side surface connecting the rake surface and the bottom surface, and a cutting edge formed on an edge at which the rake surface and the side surface intersect. The cutting edge includes a curved corner cutting edge and a pair of lateral cutting edges disposed such that both ends of the corner cutting edge are sandwiched therebetween. The pair of lateral cutting edges are formed linearly and form an acute angle. The side surface has, at a portion abutting on the corner cutting edge, a corner flank continuous with the corner cutting edge and a flat surface disposed further toward the bottom surface than the corner flank in the height direction.

According to this aspect, since the cutting insert has the pair of lateral cutting edges that form an acute angle, it is possible to perform copy machining in a narrow space. Since the cutting insert has the flat surface, a large contact area can be ensured between the cutting insert and the tool body when the cutting insert is designed as a two-corner type. It is more economical than a form tool for nongeneral purposes, a one-corner type cutting insert, or the like.

In the aspect, in a side view in a width direction orthogonal to both the longitudinal direction and the height direction, a clearance angle formed by a virtual finishing plane parallel to both the height direction and the width direction, and the flat surface may be greater than or equal to 0° and less than or equal to 10°.

According to this aspect, since an inclination of the flat surface that is supported by the tool body is small, the cutting insert is less likely to move in the height direction when a thrust force of a cutting resistance acts. The cutting insert can be stably restrained by the tool body.

In the aspect, an angle formed by the pair of lateral cutting edges may be greater than or equal to 10° and less than or equal to 35°.

According to this aspect, since the end portion has a sharply pointed shape, it is possible to perform copy machining even in a narrow space without the cutting edge interfering with adjacent portions.

In the aspect, in a side view in a width direction orthogonal to both the longitudinal direction and the height direction, a rake angle of the corner cutting edge formed by a virtual reference plane parallel to both the longitudinal direction and the width direction, and the rake surface may be greater than or equal to 5° and less than or equal to 20°.

According to this aspect, a large rake angle can be ensured, and a cutting resistance can be reduced. Even a difficult-to-cut material can be machined easily.

A turning tool according to another aspect of the present invention includes a tool body and a cutting insert mounted on the tool body. The tool body has a plurality of restraining portions that come into contact with the cutting insert to restrain movement of the cutting insert. The cutting insert extends in a longitudinal direction from a first end to a second end on an opposite side to the first end, and a first end portion that includes the first end and a portion in the vicinity thereof and a second end portion that includes the second end and a portion in the vicinity thereof are formed in substantially a same shape. The first end portion has a rake surface and a bottom surface disposed on opposite sides to each other in a height direction orthogonal to the longitudinal direction, a side surface connecting the rake surface and the bottom surface, and a cutting edge formed on an edge at which the rake surface and the side surface intersect. The cutting edge includes a curved corner cutting edge and a pair of lateral cutting edges disposed such that both ends of the corner cutting edge are sandwiched therebetween. The pair of lateral cutting edges are formed linearly and form an acute angle. The side surface has, at a portion abutting on the corner cutting edge, a corner flank continuous with the corner cutting edge and a first restrained portion that is disposed further toward the bottom surface than the corner flank in the height direction and comes into contact with a first restraining portion of the plurality of restraining portions of the tool body. The first restraining portion and the first restrained portion are formed as flat surfaces parallel to each other or uneven surfaces that fit into each other.

According to this aspect, the corresponding first restraining portion and first restrained portion come into contact with each other with a large contact area, and thus the cutting insert can be stably restrained to the tool body. It is possible to configure a turning tool equipped with a cutting insert that is capable of copy machining in a narrow space and is also highly economical.

### Advantageous Effects of Invention

According to the present invention, it is possible to provide a cutting insert or the like that is capable of copy machining in a narrow space and is also highly economical.

### Brief Description of Drawings

Fig. 1 is a perspective view showing an example of a turning tool on which a cutting insert according to one embodiment of the present invention is mounted.
Fig. 2 is a perspective view showing a restraining portion of a tool body with the cutting insert removed from the turning tool shown in Fig. 1.
Fig. 3 is a perspective view showing an example of the cutting insert according to one embodiment of the present invention.
Fig. 4 is a plan view of the cutting insert shown in Fig. 3 from a side of a rake surface.
Fig. 5 is a bottom view of the cutting insert shown in Fig. 3 from a side of a bottom surface.
Fig. 6 is a side view of the cutting insert shown in Fig. 3 from a side of a first end.
Fig. 7 is a side view of the cutting insert shown in Fig. 3 in a width direction.
Fig. 8 is a perspective view showing a state in which a first restrained portion shown in Fig. 6 is in contact with a first restraining portion of the tool body.
Fig. 9 is a side view showing a modification example of the cutting insert shown in Fig. 7.

### Description of Embodiments

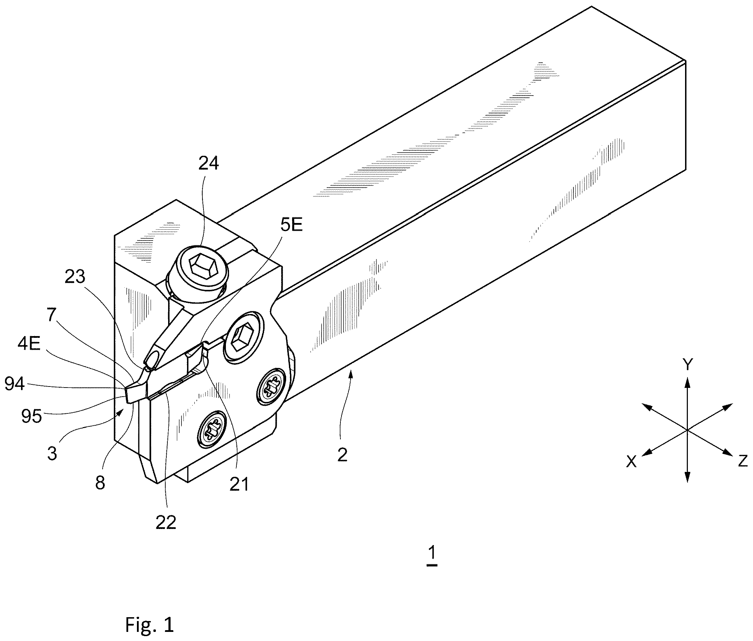

A preferred embodiment of the present invention will be described with reference to the accompanying drawings. In each drawing, elements designated by the same reference signs have the same or similar configurations. Each configuration will be described in detail below with reference to the drawings. Fig. 1 is a perspective view showing an example of a turning tool 1 on which a cutting insert 3 according to one embodiment of the present invention is mounted. As shown in Fig. 1, the turning tool 1 includes a tool body 2 and the cutting insert 3 mounted on the tool body 2.

In the following description, a longitudinal direction X of the cutting insert 3 may be referred to as an X-axis direction, a height direction Y of the cutting insert 3 may be referred to as a Y-axis direction, and a width direction Z of the cutting insert 3 may be referred to as a Z-axis direction. An X axis, a Y axis, and a Z axis are orthogonal to each other. The longitudinal direction X is a direction parallel to a straight line passing through both ends 4E and 5E of the cutting insert 3. The height direction Y is a direction orthogonal to the longitudinal direction X, on opposite sides of which a rake surface 7 and a bottom surface 8 of the cutting insert 3 are disposed. The width direction Z is a direction orthogonal to both the longitudinal direction X and the height direction Y.

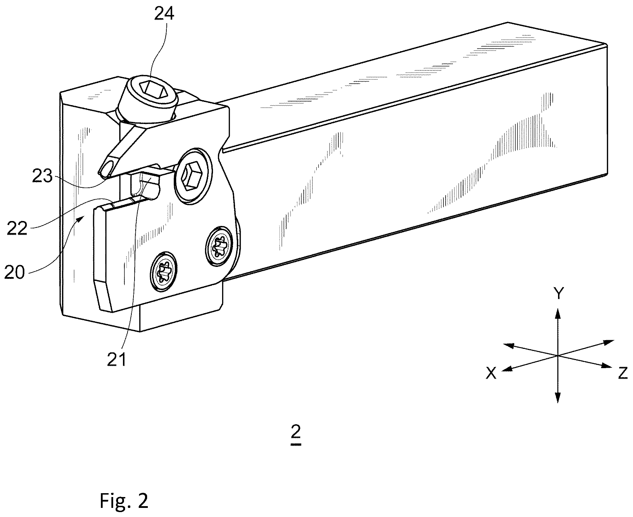

Fig. 2 is a perspective view showing a restraining portion of the tool body 2 with the cutting insert 3 removed from the turning tool 1 shown in Fig. 1. As shown in Fig. 2, the tool body 2 is formed in substantially a rod shape extending from a base end to a leading end on a side opposite to the base end, and an insert mounting seat 20 for mounting the cutting insert 3 is provided at a leading end portion including the leading end and the vicinity thereof. A portion closer to the base end than the leading end portion is configured as a shank that can be fixed to a machine tool.

**The** insert mounting seat 20 is provided with a plurality of restraining portions that come into contact with the cutting insert 3 to restrain the movement of the cutting insert 3. In the illustrated example, the tool body 2 has first to third restraining portions 21, 22, and 23, and the cutting insert 3 can be restrained by or released from the insert mounting seat 20 by tightening or loosening a fastening screw 24.

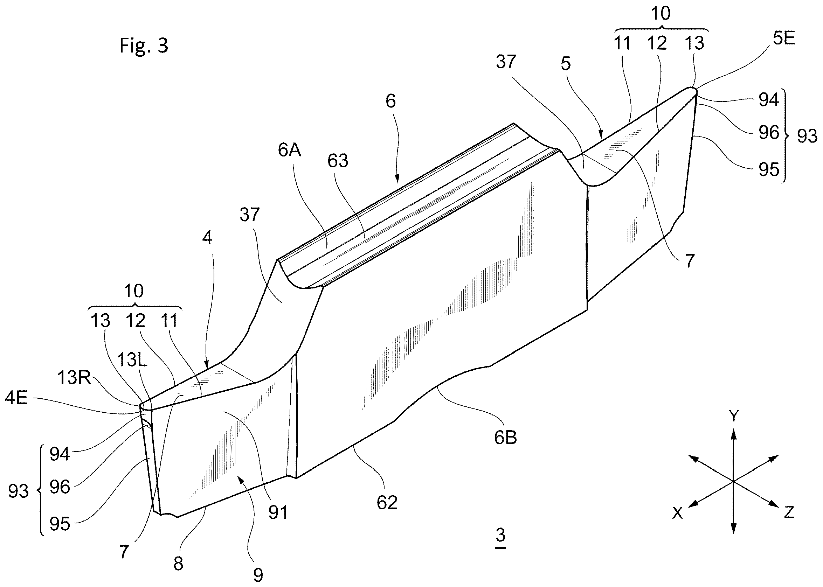

Fig. 3 is a perspective view showing an example of the cutting insert according to one embodiment of the present invention. As shown in Fig. 3, the cutting insert 3 is formed in substantially a rod shape using a hard material such as cemented carbide and extends in the longitudinal direction X from a first end 4E to a second end 5E on a side opposite to the first end 4E.

The cutting insert 3 is a two-corner type having cutting edges 10 formed at both end portions 4 and 5. A first end portion 4 that includes the first end 4E and a portion in the vicinity thereof and a second end portion 5 that includes the second end 5E and a portion in the vicinity thereof are formed in substantially the same shape. For this reason, the first end portion 4 will be described in detail as a representative example, and duplicate description of the second end portion 5 will be omitted.

**As** shown in Fig. 3, the first end portion 4 has the rake surface 7 and the bottom surface 8 disposed on sides opposite to each other in the height direction Y orthogonal to the longitudinal direction X, a side surface 9 connecting the rake surface 7 and the bottom surface 8, and the cutting edge 10 formed on an edge at which the rake surface 7 and the side surface 9 intersect. The cutting insert 3 further has a body part 6 connecting the first end portion (a first edge portion) 4 and the second end portion (a second edge portion) 5. The rake surface 7 of the first end portion 4 and an upper surface 6A of the body part 6 are connected by a gently curved surface 37. The curved surface 37 is inclined to proceed from a lower surface 6B toward an upper surface 6A of the body part 6 as it proceeds from the first end 4E toward the second end 5E.

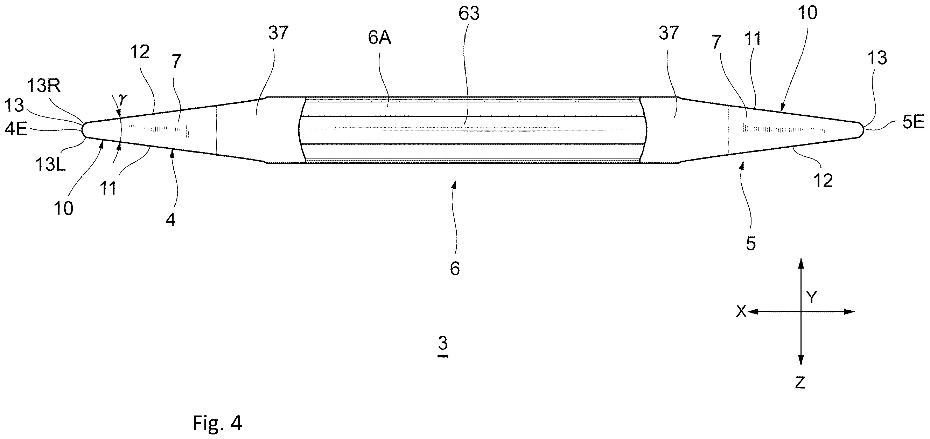

Fig. 4 is a plan view of the cutting insert 3 shown in Fig. 3 from a side of the rake surface 7. As shown in Fig. 4, the cutting edge 10 includes a curved corner cutting edge 13 and a pair of lateral cutting edges 11 and 12 disposed such that both ends 13L and 13R of the corner cutting edge 13 are sandwiched therebetween. In the illustrated example, the corner cutting edge 13 is formed in a circular arc shape. The shape of the corner cutting edge 13 is not limited to a circular arc shape, but may be an elliptical arc, a hyperbola, or a parabola.

The pair of lateral cutting edges 11 and 12 are formed linearly in a plan view from a side of the rake surface 7. An angle γ formed by the pair of lateral cutting edges 11 and 12 is an acute angle, preferably greater than or equal to 10° and less than or equal to 35°, and more preferably greater than or equal to 15° and less than or equal to 30°. In the illustrated example, the angle γ is set to 15°. If the angle γ is greater than or equal to 15°, both end portions (edge portions) 4 and 5 can be formed to have sufficient strength to be resistant to breakage even when used in lateral feed machining. If the angle γ is less than or equal to 30°, the cutting edge 10 is unlikely to interfere with adjacent portions even when inserted into a narrow space.

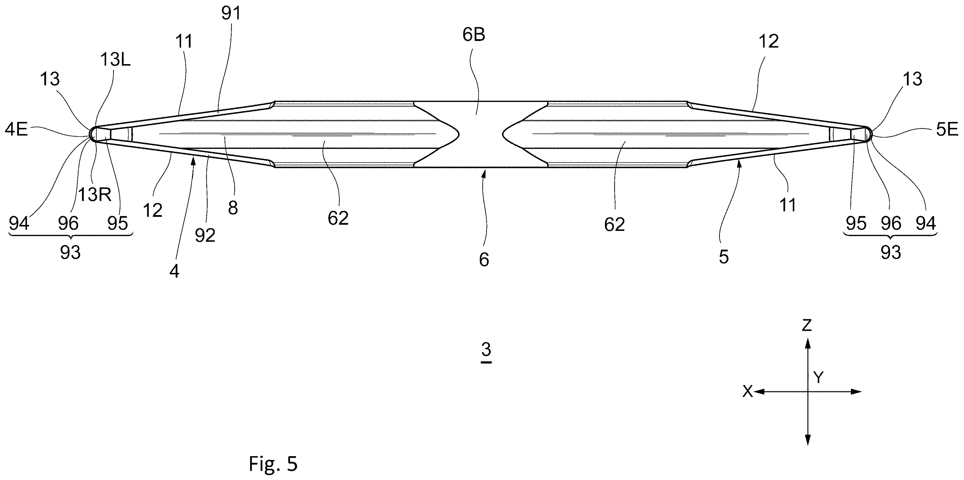

Fig. 5 is a bottom view of the cutting insert 3 shown in Fig. 3 from a side of the bottom surface 8. In the illustrated example, a corner flank 94 is formed on a cylindrical surface. The cutting insert 3 is formed, for example, in a substantially hexagonal shape in a bottom view from a side of the bottom surface 8.

**As** described above, the first end portion 4 and the second end portion 5 have substantially the same shape and function. The cutting insert 3 has mirror-image symmetry with respect to a symmetry plane that is parallel to a YZ plane and bisects the cutting insert 3 in the longitudinal direction X. Furthermore, the cutting insert 3 also has mirror-image symmetry with respect to a symmetry plane that is parallel to a XY plane and bisects the cutting insert 3 in the width direction Z.

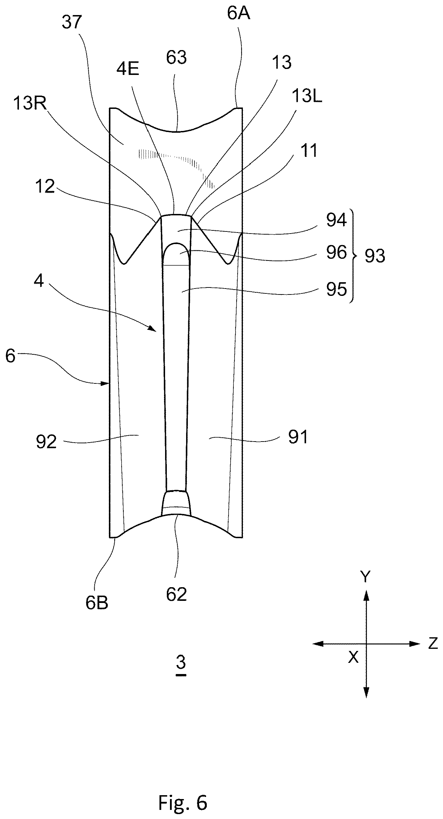

Fig. 6 is a side view of the cutting insert 3 shown in Fig. 3 from a side of the first end 4E. As shown in Fig. 6, the side surface 9 has, at a portion 93 abutting on the corner cutting edge 13, the corner flank 94 continuous with the corner cutting edge 13 and a flat surface 95 disposed closer to the bottom surface 8 than the corner flank 94 in the height direction Y.

A second restrained portion 62 that comes into contact with the second restraining portion 22 of the tool body 2 is provided on the lower surface 6B of the body part 6. A third restrained portion 63 that comes into contact with the third restraining portion 23 of the tool body 2 is provided on the upper surface 6A of the body part 6. The second and third restrained portions 62 and 63 are recessed stripes extending in the longitudinal direction X and opposing each other in the height direction Y. In the illustrated example, the direction parallel to the upper surface 6A and lower surface 6B of the body part 6 may be referred to as the longitudinal direction X of the cutting insert 3, and the direction in which the second and third restrained portions 62 and 63 oppose each other may be referred to as the height direction Y.

In the illustrated example, the second restrained portion 62 is formed as a recessed cylindrical surface that is recessed toward the third restrained portion 63, and the third restrained portion 63 is formed as a recessed cylindrical surface that is recessed toward the second restrained portion 62. The shape of the recessed stripes functioning as the second and third restrained portions 62 and 63 is not limited to the concave cylindrical surface, but may be a V-shaped groove extending in the longitudinal direction X. Since the recessed stripes of the second and third restrained portions 62 and 63 fit into projected stripes of the second and third restraining portions 22 and 23, the cutting insert 3 is less likely to move in the width direction Z even when a feed force of a cutting resistance acts. The lateral cutting edges 11 and 12 can be fed in the width direction Z to perform lateral feed machining.

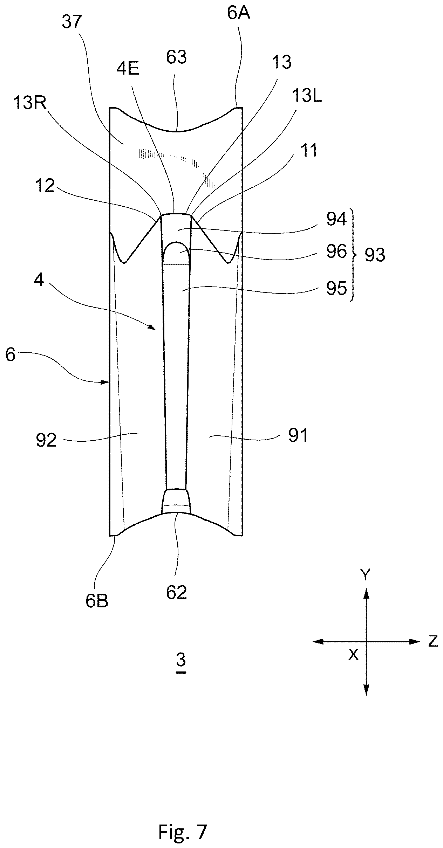

Fig. 7 is a side view of the cutting insert 3 shown in Fig. 3 in the width direction Z. As shown in Fig. 7, in the portion 93 abutting on the corner cutting edge 13, the flat surface 95 is disposed closer to the bottom surface 8 than the corner flank 94 in the height direction Y and is configured as a retracted surface that is retracted closer to the second end 5E than the corner flank 94 in the longitudinal direction X. The side surface 9 may further have a step surface 96 connecting the retracted surface 95 and the corner flank 94.

The rake surface 7 is inclined to proceed in a direction from the rake surface 7 toward the bottom surface 8 (hereinafter referred to as downward) in the height direction Y as it moves away from the first end 4E in the longitudinal direction X. As shown in Fig. 7, in a side view in the width direction Z, a rake angle α of the corner cutting edge 13 formed by a virtual plane (a virtual reference plane) VPr parallel to both the longitudinal direction X and the width direction Z and the rake surface 7 is preferably greater than or equal to 5° and less than or equal to 20°. In the illustrated example, the rake angle α is 10°, and the rake surface 7 is formed as a flat surface. In a side view in the width direction Z, the rake surface 7 appears as a straight line proceeding downward in the height direction Y as it proceeds from the first end 4E to the second end 5E in the longitudinal direction X.

The rake surface 7 may be formed as a curved surface. In this case, the rake angle α is an angle formed by a tangent to the rake surface 7 drawn at the first end 4E and the virtual plane VPr in a side view in the width direction Z. A land parallel to the longitudinal direction X may be formed between the cutting edge 10 and the rake surface 7. In this case, the rake angle α is an angle formed by a tangent to the rake surface 7 drawn at a boundary between the land and the rake surface 7 and the virtual plane VPr. The boundary between the land and the rake surface 7 is a portion at which a straight line parallel to the longitudinal direction X intersects with a straight line or curve inclined with respect to the longitudinal direction X in a side view in the width direction Z.

**As** shown in Fig. 7, in a side view in the width direction Z, an angle β formed by a virtual plane (a virtual finishing surface) Vms parallel to both the height direction Y and the width direction Z and the flat surface 95 is preferably greater than or equal to 0° and less than or equal to 10°. In the illustrated example, the angle β is 7.5°. In the present specification, the angle β of the flat surface 95 has a positive or negative value in the same direction as a clearance angle of the corner cutting edge 13 directly above the flat surface 95. That is, when the angle β is a positive value (β > 0), the flat surface 95 is inclined in a direction approaching the second end 5E in the longitudinal direction X as it moves toward the bottom surface 8 in the height direction Y. When the angle β is a negative value (β < 0), the flat surface 95 is inclined in a direction away from the second end 5E in the longitudinal direction X as it moves toward the bottom surface 8 in the height direction Y.

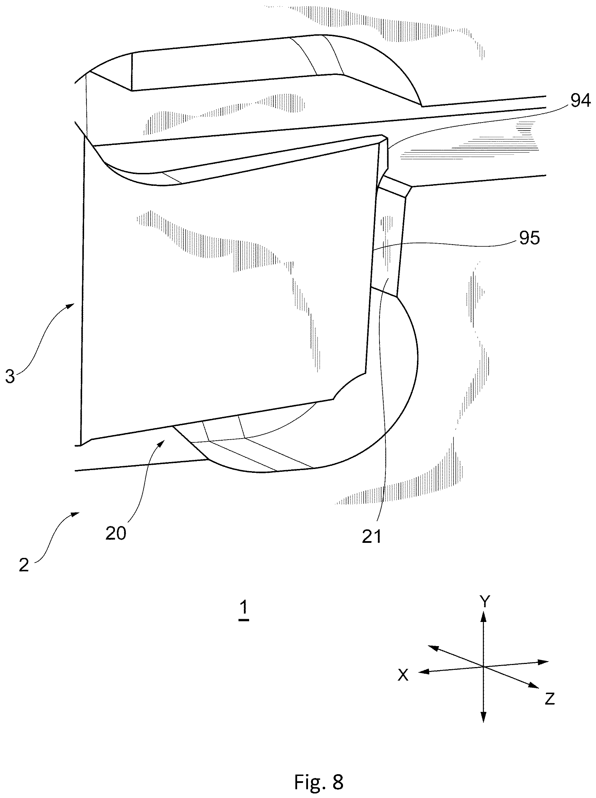

Fig. 8 is a perspective view showing a state in which the flat surface 95 shown in Fig. 7 is in contact with the first restraining portion 21 of the tool body 2. The cutting insert 3 has a first restrained portion that is in contact with the first restraining portion 21 of the tool body 2 in a state in which the cutting insert 3 is mounted on the insert mounting seat 20. The flat surface 95 described above is an example of the first restrained portion. As shown in Fig. 8, the first restraining portion 21 and the flat surface 95 are formed as flat surfaces parallel to each other.

**The** combination of the first restraining portion 21 and the first restrained portion opposing the first restraining portion 21 is not limited to the illustrated example and may be formed as uneven surfaces that fit into each other. For example, the first restrained portion 95 may be formed as a recessed cylindrical surface that is curved in a direction opposite to the corner cutting edge 13, and the first restraining portion 21 may be formed as a cylindrical surface having substantially the same diameter. For example, a structure in which a notch is formed in the first restrained portion 95 and a projected part that fits into the notch is formed in the first restraining portion 21 may be used.

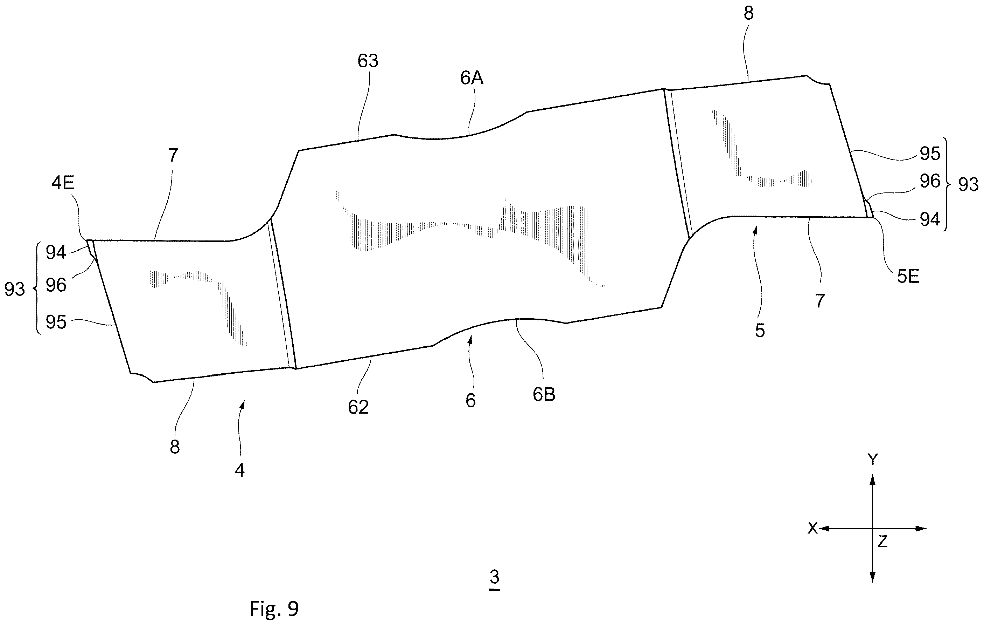

Fig. 9 is a side view showing a modification example of the cutting insert 3 shown in Fig. 7. In the illustrated example, the two-corner type cutting insert 3 is disposed such that the rake surface 7 provided at the first end portion 4 and the rake surface 7 provided at the second end portion 5 are opposite to each other in the height direction Y. Even in such a modification example, the first restrained portions 95 are provided at positions offset from the corner flanks 94 at both the end portions 4 and 5, and thus the cutting insert 3 can be stably restrained by the tool body 2.

According to the cutting insert 3 of the present embodiment configured as described above and the turning tool 1 equipped with the cutting insert 3, the pair of lateral cutting edges 11 and 12 form an acute angle γ and both the end portions 4 and 5 have a sharply pointed shape, and thus the cutting edge 10 can perform copy machining even in a narrow space without interfering with adjacent portions. Even though the cutting insert has both the pointed end portions 4 and 5 each having the acute angle γ, a large contact area can be secured between the first restraining portion 21 provided on the tool body 2 and the first restrained portion 95 provided on the cutting insert 3, and thus the cutting insert 3 can be stably restrained by the tool body 2. Since the cutting insert is a two corner type that allows the cutting edges 10 at both the end portions 4 and 5 to be used, it is highly economical.

The above-described embodiments are intended to facilitate understanding of the present invention and are not intended to limit the present invention. The elements of the embodiments as well as their arrangement, materials, conditions, shapes, sizes, and the like are not limited to those exemplified and can be modified as appropriate. Furthermore, configurations shown in different embodiments may be partially substituted or combined with each other.

### Reference Signs List

- 1: Turning tool
- 2: Tool body
- 3: Cutting insert
- 4: First end portion
- 4E: First end
- 5: Second end portion
- 5E: Second end
- 6: Body part
- 6A: Upper surface
- 6B: Lower surface
- 7: Rake surface
- 8: Bottom surface
- 9: Side surface
- 10: Cutting edge
- 11: One lateral cutting edge
- 12: Another lateral cutting edge
- 13: Corner cutting edge
- 13L, 13R: Both ends of corner cutting edge
- 20: Insert mounting seat
- 21: First restraining portion
- 22: Second restraining portion
- 23: Third restraining portion
- 24: Fastening screw
- 37: Curved surface
- 62: Second restrained portion
- 63: Third restrained portion
- 91: Flank of one lateral cutting edge
- 92: Flank of another lateral cutting edge
- 93: Portion abutting on corner cutting edge
- 94: Corner flank
- 95: Flat surface (example of first restrained portion)
- 96: Step surface
- Vms: Virtual finishing surface
- VPr: Virtual reference plane
- X: Longitudinal direction
- Y: Height direction
- Z: Width direction
- α: Rake angle of corner cutting edge
- β: Inclination angle of first restraining portion
- γ: Crossing angle of lateral cutting edges

## Claims

1. A cutting insert extending in a longitudinal direction from a first end to a second end on an opposite side to the first end,
wherein a first end portion that includes the first end and a portion in the vicinity thereof and a second end portion that includes the second end and a portion in the vicinity thereof are formed in substantially a same shape,
wherein the first end portion has a rake surface and a bottom surface disposed on opposite sides to each other in a height direction orthogonal to the longitudinal direction, a side surface connecting the rake surface and the bottom surface, and a cutting edge formed on an edge at which the rake surface and the side surface intersect,
wherein the cutting edge includes a curved corner cutting edge and a pair of lateral cutting edges disposed such that both ends of the corner cutting edge are sandwiched therebetween,
wherein the pair of lateral cutting edges are formed linearly and form an acute angle, and
wherein the side surface has, at a portion abutting on the corner cutting edge, a corner flank continuous with the corner cutting edge and a flat surface disposed further toward the bottom surface than the corner flank in the height direction.

2. The cutting insert according to claim 1, wherein, in a side view in a width direction orthogonal to both the longitudinal direction and the height direction,
an angle formed by a virtual plane parallel to both the height direction and the width direction, and the flat surface is greater than or equal to 0° and less than or equal to 10°.

3. The cutting insert according to claim 1 or 2, wherein an angle formed by the pair of lateral cutting edges is greater than or equal to 10° and less than or equal to 35°.

4. The cutting insert according to any one of claims 1 to 3, wherein, in a side view in a width direction orthogonal to both the longitudinal direction and the height direction,
a rake angle of the corner cutting edge formed by a virtual plane parallel to both the longitudinal direction and the width direction, and the rake surface is greater than or equal to 5° and less than or equal to 20°.

5. A turning tool comprising a tool body and a cutting insert mounted on the tool body,
wherein the tool body has a plurality of restraining portions that come into contact with the cutting insert to restrain movement of the cutting insert,
wherein the cutting insert extends in a longitudinal direction from a first end to a second end on an opposite side to the first end,
wherein a first end portion that includes the first end and a portion in the vicinity thereof and a second end portion that includes the second end and a portion in the vicinity thereof are formed in substantially the same shape,
wherein the first end portion has a rake surface and a bottom surface disposed on sides opposite to each other in a height direction orthogonal to the longitudinal direction, a side surface connecting the rake surface and the bottom surface, and a cutting edge formed on an edge at which the rake surface and the side surface intersect,
wherein the cutting edge includes a curved corner cutting edge and a pair of lateral cutting edges disposed such that both ends of the corner cutting edge are sandwiched therebetween,
wherein the pair of lateral cutting edges are formed linearly and form an acute angle,
wherein the side surface has, at a portion abutting on the corner cutting edge, a corner flank continuous with the corner cutting edge and a first restrained portion that is disposed further toward the bottom surface than the corner flank in the height direction and comes into contact with a first restraining portion of the plurality of restraining portions of the tool body, and
wherein the first restraining portion and the first restrained portion are formed as flat surfaces parallel to each other or uneven surfaces that fit into each other.
